# EUROPEAN PATENT APPLICATION

(11) **EP 4 814 762 A1**
(43) Date of publication of application: **30.09.2026**
(21) Application number: 26156912.3
(22) Date of filing: 06.02.2026
(51) Int. Cl.: G06F 21/44, H04B 10/116, H04L 9/40, H04W 12/06

(54) **USING PHYSICAL LOCATION FOR DEVICE AUTHENTICATION**

(30) Priority: 27.03.2025 US 202519091984
(71) Applicant: Rockwell Automation Asia Pacific Business center Pte. Ltd., Singapore 618494 (SG)
(72) Inventor: Yew, Wen Chinn, 618494 Singapore (SG); Visoky, Jack M., Mayfield Heights, OH, 44124 (US); Ng, Kiong Yong, 618494 Singapore (SG)
(74) Representative: Grünecker Patent- und Rechtsanwälte PartG mbB

(57) **Abstract**

A method of using physical location for authentication initiates communication between a mobile device and a control device located within an industrial control system. An authentication code is generated within the control device and output from the control device in either a visible spectrum, an infrared spectrum, or an ultraviolet spectrum. An input code, corresponding to the authentication code, is received at the mobile device and transmitted from the mobile device to the control device. The input code received at the control device is verified to match the authentication code. Communication between the mobile device and the control device is permitted when the input code received at the control device matches the authentication code.

## Description

### BACKGROUND INFORMATION

The subject matter disclosed herein relates to multi-factor authentication in an industrial control system. More specifically, physical presence at a control device in the industrial control system may be utilized as an additional factor in the multi-factor authentication process.

As is known to those skilled in the art, electronic devices, generally, and industrial control devices, more specifically, are becoming more connected. Industrial networks allow communication between devices ranging from individual sensors to a programmable controller. Further, a desire for remote monitoring of devices may lead to a technician in a control room observing operation of the devices anywhere within the control system as long as they are connected to the industrial network. The remote monitoring may be extended externally from a building via a dedicated intranet or via the Internet. Providing remote access for technicians may improve efficiency and permit a single technician to monitor a wider range of control systems. Remote access may also allow for improved tracking of operation and long-term diagnostics of the control system.

However, such remote access has not been fully met without incurring various disadvantages. There are a growing number and sophistication of cyber attacks. Cyber attacks include, for example, denial-of-service (DoS) or ransomware attacks. Bad actors can disrupt operation of computers and networks within an institution and/or demand payment to restore operation to normal. Such cyber attacks could cause other disruption, such as unexpected operation of a controlled machine or process in an industrial control system. The unexpected operation could result in damage to equipment or product, harm to personnel, or substantial expense in lost production. Newer devices may be configured from a manufacturer to utilize modern security measures to prevent or to reduce the risk of cyber attacks. However, many legacy devices exist in industrial control systems, where it may be either impractical or impossible to upgrade the legacy devices to implement modern security measures.

Thus, it would be desirable to provide an improved system and method for authenticating connections between devices in an industrial control system.

It would further be desirable to provide multi-factor authentication with legacy devices in a control system.

### BRIEF DESCRIPTION

According to one embodiment of the invention, a method for authenticating communication in an industrial control system includes generating an authentication request with a mobile computing device and transmitting the authentication request from the mobile computing device to a control device located within the industrial control system. The mobile computing device is located within a line of sight of the control device. An authentication code is generated within the control device responsive to receiving the authentication request, and the authentication code is output in an electromagnetic spectrum from the control device. An input code, corresponding to the authentication code, is received at the mobile computing device, and the input code is transmitted from the mobile computing device to the control device. Authentication of communication between the mobile computing device and the control device is complete when the input code received at the control device matches the authentication code generated by the control device.

According to another embodiment of the invention, an apparatus for authenticating a control device in an industrial control system includes a mobile computing device and a control device. The mobile computing device includes a non-transitory memory storing a first plurality of instructions and a first processor operative to execute the first plurality of instructions. The control device includes an electromagnetic radiation generating device, a non-transitory memory storing a second plurality of instructions, and a second processor operative to execute the second plurality of instructions. The first processor is operative to generate an authentication request and to transmit the authentication request to the second processor. The second processor is operative to generate an authentication code responsive to receiving the authentication request and to enable the electromagnetic radiation generating device to output the authentication code. The first processor is further operative to receive an input code corresponding to the authentication code and to transmit the input code to the second processor. The second processor is further operative to verify the input code received from the first processor matches the authentication code.

According to still another embodiment of the invention, a method of using physical location for authentication initiates communication between a mobile device and a control device located within an industrial control system. An authentication code is generated within the control device and output from the control device in either a visible spectrum, an infrared spectrum, or an ultraviolet spectrum. An input code, corresponding to the authentication code, is received at the mobile device and transmitted from the mobile device to the control device. The input code received at the control device is verified to match the authentication code. Communication between the mobile device and the control device is permitted when the input code received at the control device matches the authentication code.

These and other advantages and features of the invention will become apparent to those skilled in the art from the detailed description and the accompanying drawings. It should be understood, however, that the detailed description and accompanying drawings, while indicating preferred embodiments of the present invention, are given by way of illustration and not of limitation. Many changes and modifications may be made within the scope of the present invention without departing from the spirit thereof, and the invention includes all such modifications.

### BRIEF DESCRIPTION OF THE DRAWINGS

Various exemplary embodiments of the subject matter disclosed herein are illustrated in the accompanying drawings in which like reference numerals represent like parts throughout, and in which:
FIG. 1 is an exemplary control system in utilizing physical location for device authentication;
FIG. 2 is a block diagram representation of a portion of the control system of Fig. 1; and

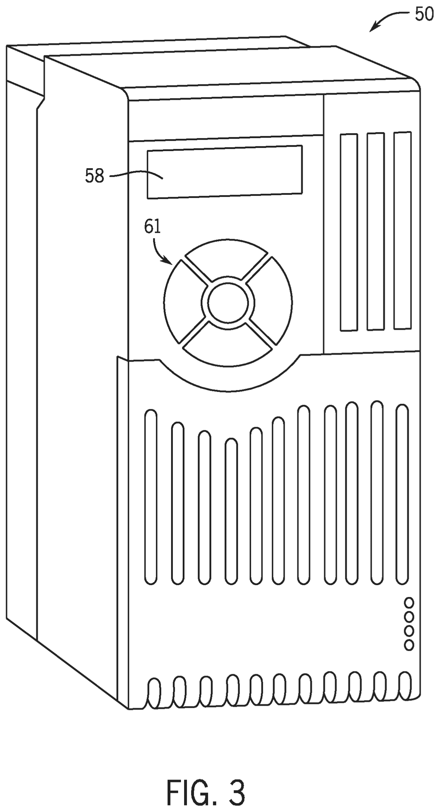

FIG. 3 is a perspective view of an exemplary motor drive for use in the control system of Fig. 1;
FIG. 4 is a front elevation view of exemplary input and output modules for use in the control system of Fig. 1; and
FIG. 5 is a sequence diagram illustrating authentication between two devices according to one embodiment of the invention.

In describing the various embodiments of the invention which are illustrated in the drawings, specific terminology will be resorted to for the sake of clarity. However, it is not intended that the invention be limited to the specific terms so selected and it is understood that each specific term includes all technical equivalents which operate in a similar manner to accomplish a similar purpose. For example, the word "connected," "attached," or terms similar thereto are often used. They are not limited to direct connection but include connection through other elements where such connection is recognized as being equivalent by those skilled in the art.

### DETAILED DESCRIPTION

The various features and advantageous details of the subject matter disclosed herein are explained more fully with reference to the non-limiting embodiments described in detail in the following description.

The subject matter disclosed herein describes an improved system and method for authenticating connections between devices in an industrial control system. Many devices in an industrial control system include some user interface to provide status of the device to a technician. Some devices, such as a Human Machine Interface (HMI) include a full visual display monitor. The primary purpose of an HMI is to display information regarding the control system to a technician and to provide a user interface by which the technician may interact with the control system. Other devices may include a basic display, such as a segmented liquid crystal display (LCD) or light-emitting diode (LED) display. Still other devices may include a single LED indicating power or additional LEDs indicating other operating states of the device. The present invention utilizes these user interfaces for authentication between the device and a second device.

A mobile device, such as a mobile phone, tablet computer, notebook computer, laptop computer, or the like may be utilized by a technician to upload data from or download data to a controlled device. Authentication of the device utilizes the physical presence of the device as one factor in the authentication. The mobile device transmits a request for communication to the controlled device, and, in response, the controlled device generates an authentication code. The authentication code is displayed to the technician in a manner suitable for the user interface present on the device. On the HMI, for example, the authentication code may be an alphanumeric code placed on the display. For a control device with multiple LEDs, a portion of the LEDs may be energized to create a pattern corresponding to the authentication code. If just a single LED is present, the LED may be alternately energized and de-energized in a pattern corresponding to the authentication code. The technician enters the authentication code into the mobile device, and the mobile device transmits the entered code back to the controlled device. When the controlled device verifies that the input code received from the mobile device matches the authentication code generated, communication between the two devices may proceed.

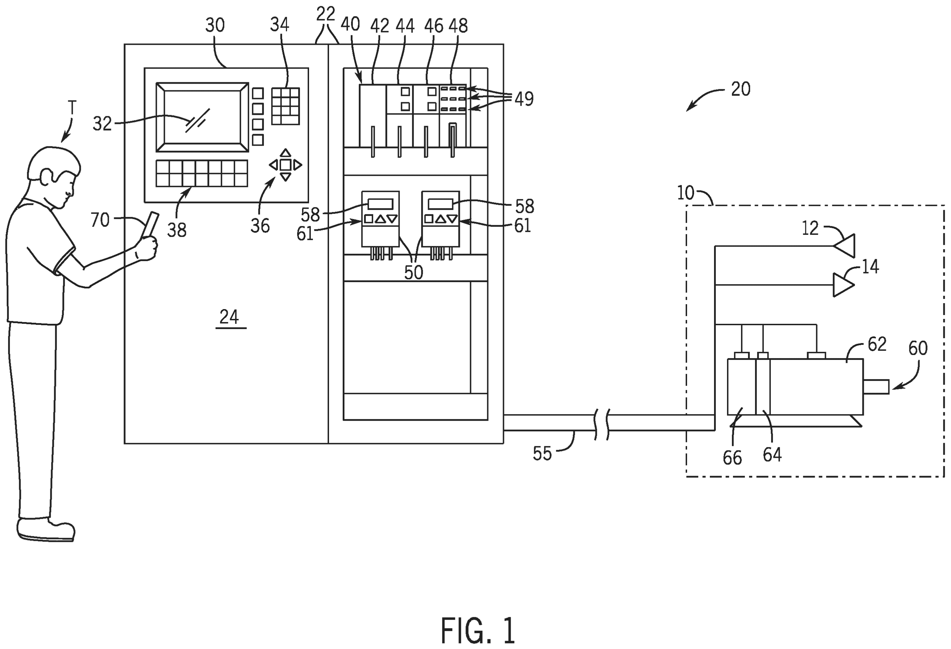

Referring initially to Fig. 1, an industrial control system 20 may include control cabinets 22 housing control devices. The control cabinets 22 may be located in a dedicated control room or out in a manufacturing environment proximate a machine or process 10 to be controlled by the control system 20. The illustrated embodiment includes a first control cabinet with a closed door 24 on which a human machine interface (HMI) 30 is mounted and a second control cabinet with a door removed for illustration purposes. The control cabinets 22 include doors to provide an enclosure in which the control devices are protected from the ambient environment in which the control cabinet is located.

The HMI 30 is typically an industrial computer hardened for use in a manufacturing environment. The HMI 30 is in communication with an industrial controller 40 to provide information to a technician, T, regarding the controlled machine or process 10. A display 32 allows data to be shown to the technician, T, and may be a touch screen to additionally receive input from the technician. Additional user interface devices are provided on the HMI such as a numerical keypad 34, a directional keypad 36 for menu navigation, and preprogrammed function keys 38, providing rapid access to various screens, menus, or data as required by the application requirements. In addition to an HMI 30, the technician, T, may have a mobile device 70 configured to communicate with an industrial controller 40, where the mobile device 70 may be a mobile phone, tablet computer, notebook computer, laptop computer, or the like.

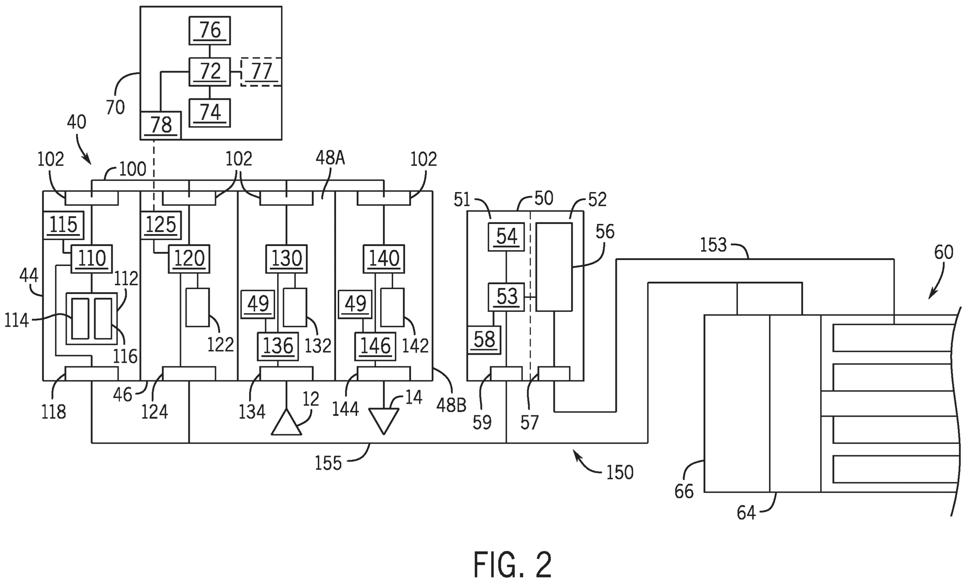

The industrial controller 40 is mounted within the second control cabinet 22. The industrial controller 40 is configurable and includes multiple modules with a backplane 100 (see also Fig. 2) extending between and providing communication between the modules. The modules may be installed within a housing or on a mounting bracket, such as a DIN rail. The illustrated industrial controller 40 includes a power supply module 42, a processor module 44, a network module 46, and one I/O module 48. The network module 46, processor module 44, or a combination thereof may communicate on an industrial control network 150 (see also Fig. 2), such as ControlNet^{®}, DeviceNet^{®}, or EtherNet/IP^{®}, between the industrial controller 40 and other devices connected to the industrial controller. The industrial network 150 includes network media 155, which may be wired, wireless, or a combination thereof, connecting devices for communication on the industrial network. The industrial controller 40 may be, for example, a programmable logic controller (PLC), a programmable automation controller (PAC), or the like. It is contemplated that the industrial controller 40 may include still other modules, such as an axis control module, various numbers and arrangements of each of the illustrated modules, or additional racks connected via the industrial control network 150. Optionally, the industrial controller 40 may have a fixed configuration, for example, with a predefined number of network and I/O connections. The I/O module 48 receives input signals from sensors 12 or other devices present on the controlled machine or process 10 and transmits output signals to actuators 14 or other devices also present on the controlled machine or process.

Also shown in the second control cabinet 22 are two cabinet mounted motor drives 50. The cabinet mounted motor drives 50 are in communication with the industrial controller 40 to receive motion commands for motors 60 connected to the motor drives 50. Wiring 55 must also be run from the cabinet mounted motor drives 50 to the motors 60. For ease of illustration, a single block represents all of the wiring 55 extending between the control cabinets 22 and the controlled machine or process 10. It is understood that the wiring 55 would run to multiple locations and for multiple distances ranging from tens to hundreds of feet. Wires may be run individually, in bundles, as a cable, in cable trays, conduits, or in any other suitable manner according to the application requirements. A cabinet mounted motor drive 50 typically includes power wires and control wires extending between the motor drive 50 and the motor 60. The power wires supply the desired voltage and current to cause rotation of the motor 60 and the control wires may be input signals, such as encoder feedback, or output signals, such as brake control commands. The illustrated motor 60 includes a motor chassis 62 containing the stator and rotor of the motor as well as an encoder 64 and a brake unit 66 mounted to the motor chassis 62.

Turning next to Fig. 2, a portion of the control system 20 is illustrated in more detail. The processor module 44 includes a processor 110 communicating with a memory device 112 to execute an operating system program 114, generally controlling the operation of the processor module 44, and a control program 116, describing a desired control of the industrial machine or process 10, where each control program 116 is typically unique to a given application of the industrial control system 20. The memory device 112 may be a single device or multiple devices and at least a portion of the memory device 112 includes non-transitory memory. The memory 112 may also include data tables, for example, I/O tables and service routines (not shown in Fig. 2) as used by the control program 116. The processor module 44 communicates via a bus, illustrated as a backplane 100 extending between backplane connectors 102, with the network module 46 or any of the other modules 48 in the industrial controller 40. The processor module 44 may also include one or more ports 115 for connection to a device. According to one exemplary application, a mobile device, such as a mobile phone, tablet computer, notebook computer, laptop computer, or the like, may be plugged into the port 115 to communicate with the processor module 44.

The network module 46 includes a control circuit 120, which may include a microprocessor and a program stored in memory 122 and/or dedicated control circuitry such as an application specific integrated circuit (ASIC) or field programmable gate array (FPGA). The memory 122 may be a single device or multiple devices and at least a portion of the memory 122 includes non-transitory memory. The control circuit 120 is in communication with the other modules in the industrial controller via the backplane connector 102 and the backplane 100. The control circuit 120 may communicate with a network interface circuit 124 within the network module 46, where the network interface circuit 124 provides for execution of low-level electrical protocols on the industrial control network 150. The network module 46 may also include one or more ports 125 for connection to a device. According to the illustrated embodiment, the port 125 may be connected to the mobile device 70 to provide a wired connection between the network module 46 and the mobile device.

A first I/O module 48A is illustrated as an input module, configured to receive input signals from sensors 12 or other devices in the controlled machine or process 10. The first I/O module 48A includes a control circuit 130, which may include a microprocessor and a program stored in memory 132 and/or dedicated control circuitry such as an application specific integrated circuit (ASIC) or field programmable gate array (FPGA). The memory 132 may be a single device or multiple devices and at least a portion of the memory 132 includes non-transitory memory. The control circuit 130 is in communication with the other modules in the industrial controller via the backplane connector 102 and the backplane 100. The control circuit 130 is also in communication with a logic interface circuit 136, where the logic interface circuit converts input signals received from the sensors 12 via terminals 134 on the input module 48A into digital signals for use by the control circuit 130. The logic interface circuit 136 may also include drivers for light-emitting diodes (LEDs) 49, where one LED 49 corresponds to each input channel on the input module 48A. Each LED 49 may be selectively enabled or disabled to correspond to a present state of the corresponding input channel.

A second I/O module 48B is illustrated as an output module, configured to transmit output signals to actuators 14 or other devices in the controlled machine or process 10. The second I/O module 48B includes a control circuit 140, which may include a microprocessor and a program stored in memory 142 and/or dedicated control circuitry such as an application specific integrated circuit (ASIC) or field programmable gate array (FPGA). The memory 142 may be a single device or multiple devices and at least a portion of the memory 142 includes non-transitory memory. The control circuit 140 is in communication with the other modules in the industrial controller via the backplane connector 102 and the backplane 100. The control circuit 140 is also in communication with a logic interface circuit 146, where the logic interface circuit converts digital signals from the control circuit 140 to output signals for transmission to the actuators 14 via terminals 144 on the output module 48B. The logic interface circuit 146 may also include drivers for light-emitting diodes (LEDs) 49, where one LED 49 corresponds to each output channel on the output module 4B. Each LED 49 may be selectively enabled or disabled to correspond to a present state of the corresponding output channel.

Each motor drive 50 includes a control section 51 and a power section 52. The power section 52 includes components typically handling, for example, 200-575 VAC or 200-800VDC. The power section 52 receives power in one form and utilizes power switching devices 56 to regulate power output to the motor 60 in a controlled manner to achieve desired operation of the motor. Cabling 153 connects power output terminals 57 of the motor drive 50 to supply the generated output voltage to the motor 60. The control section 51 includes components typically handling, for example 110 VAC or 3.3-50VDC. The control section 51 includes processing devices, feedback circuits, and supporting logic circuits to receive feedback signals and generate control signals within the motor drive 50. The illustrated embodiment includes a processor 53 in communication with memory 54. The processor receives data from the industrial network 150 via a communication interface 59. The data includes, for example, commands from the industrial controller 40 corresponding to desired operation of the motor. The processor 53 executes one or more modules to control operation of the switching devices 56 to generate a desired output voltage to achieve desired operation of the motor 60. Each motor drive 50 may further include a user display 58 and a user interface 61. The user display 58 may be a liquid crystal display (LCD), a segmented LED display, LEDs, or a combination thereof. The user display may work in combination with one or more buttons on the user interface 61 to allow for data entry, parameter selection, and configuration. The user display 58 may also be used to provide an indication of the current operating status of the motor drive 50.

As indicated above, the mobile device 70 may be a mobile phone, tablet computer, notebook computer, laptop computer, or the like. The mobile device 70 includes a processor 72 communicating with a memory device 74. The memory device 74 may be a single device or multiple devices and at least a portion of the memory device 74 includes non-transitory memory. The processor 72 executes an operating system stored on the memory device 74 to manage operation of the mobile device 70. The processor 72 further executes applications stored on the memory device 74 to perform desired functions, such as uploading data from or downloading data to a control device in the industrial control system 20. The mobile device 70 includes a user interface 76, where the user interface 76 may include a touchscreen display to both present information to the technician, T, and to receive input from the technician. The user interface 76 may also include one or more buttons, touchpads, function keys, arrow keys, or the like to receive input from the technician. A communication interface 78 provides wired and/or wireless communication between the mobile device 70 and a control device. The mobile device 70 may also include a sensor 77 mounted in or on the mobile device 70. As will be discussed in more detail below, the sensor 77 may automatically detect a code output from the control device during the authentication process.

In operation, the mobile device 70 utilizes the physical presence of the control device to which it wishes to communicate as one step in authenticating communication between the two devices. Unlike remote communication via the Internet or even an Intranet, requiring the mobile device 70 to be present near a device allows the physical location of the control device to be utilized as one factor in authentication of communication. Preferably, the technician, T, holding the mobile device 70 is within a line-of-sight of the device to which the technician wishes to connect the mobile device 70. The control device then outputs a code via a user interface present on the control device, which may be entered into the mobile device 70 for authentication.

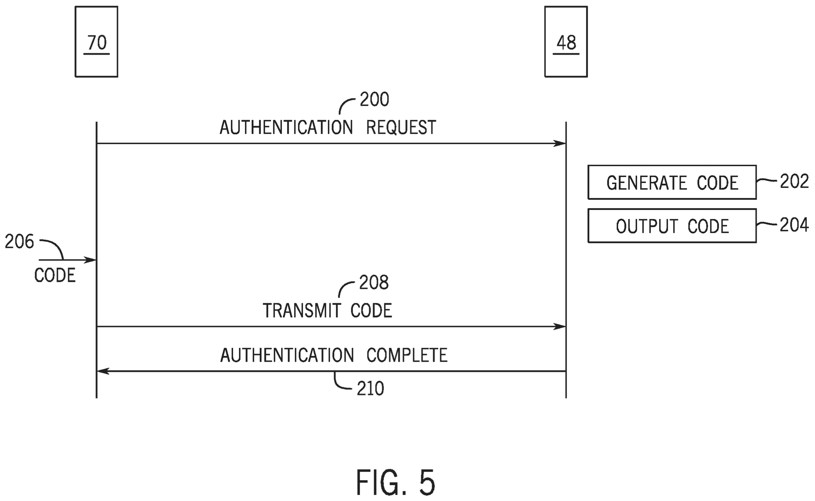

With reference to Fig. 5, the mobile device 70 will generate an authentication request. As shown in step 200, the authentication request is transmitted from the mobile device 70 to a control device with which the mobile device 70 wishes to communicate. According to the illustrated embodiment, the control device is an I/O module 48. The illustrated embodiment is not intended to be limiting. Rather, the mobile device 70 may be configured to communicate with any control device in the industrial control system suitably configured for such communication. Exemplary control devices include, but are not limited to, the processor module 44, the network module 46 a motor drive 50, a motor 60, a sensor 12, or an actuator 14. Upon receiving the authentication request, the I/O module 48 generates an authentication code, as shown in step 202. At step 204, the authentication code is output from the I/O module 48.

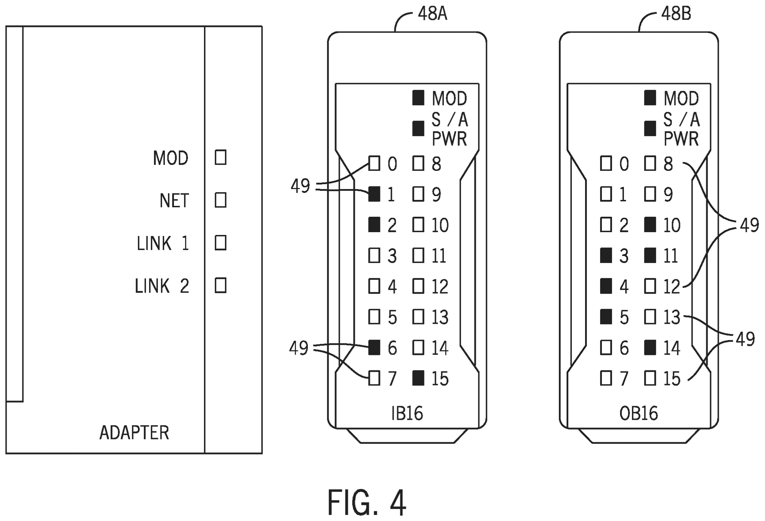

With reference also to Fig. 4, a first I/O module 48A and a second I/O module 48B are illustrated. The first I/O module 48A is an input module including 16 input channels, where the channels are labelled from Channel 0 to Channel 15. The second I/O module 48B is an output module including 16 output channels, where the channels are labelled from Channel 0 to Channel 15. Each channel of the input module 48A and each channel of the output module 48B includes a corresponding LED 49, which provides an indication of the current status of the channel. On the input module 48A, each LED 49 is illuminated when the controlled device 12 connected to the corresponding channel of the input module 48A is in an ON state, and each LED 49 is off when the controlled device 12 connected to the corresponding channel of the input module 48A is in an OFF state. On the output module 48B, each LED 49 is illuminated when the actuator 14 connected to the corresponding channel of the output module is commanded to an energized state, and each LED 49 is off when the actuator 14 connected to the corresponding channel of the output module 48B is commanded to be in an OFF state.

When the authentication code is to be output from the I/O modules 48, the control circuit 130, 140 in the corresponding module temporarily overrides the status function of the LEDs 49 and uses the LEDs 49 to display the authentication code. According to one aspect of the invention, a random or pseudo-random number generator may be utilized to generate a sixteen bit number. The sixteen bit number may be presented on the LEDs 49 by energizing the LED corresponding to each bit of the number which is a one and de-energizing the LED corresponding to each bit of the number which is a zero. The technician, T, observes which LEDs 49 are on and records the sixteen bit number generated as the authentication code.

The technician, T, in turn, enters the code back into the mobile device 70, as shown in step 206. The mobile device 70 may present a graphical representation of the I/O module 48 and provide sixteen checkboxes. Each checkbox corresponds to one of the channels on the I/O module 48 and is selectable via a touchscreen display on the I/O module 48. In order to input the authentication code, the technician, T, selects each box corresponding to one of the LEDs 49 on the input module 48 which is energized. Optionally, the mobile device 70 may present a numerical or alphanumerical entry field in which the technician, T, selectively enters a zero or a one for each channel. Each zero corresponds to a channel which is deenergized and each one corresponds to a channel which is energized. It is understood that still other methods of entering the authentication code, as displayed by the LEDs 49, into the mobile device 70 may be utilized. For clarity of discussion, the code entered into the mobile device 70 will be referred to herein as an input code, and the code generated by the I/O device, or other such control device to which the mobile device 70 transmits an authentication request, will be referred to as the authentication code. When the authentication code is properly entered into the mobile device 70, the authentication code and the input code will be identical.

As next shown in step 208, the mobile device 70 will transmit the input code to the I/O module 48. Because the I/O module 48 originally generated the authentication code, it can now compare the input code received from the mobile device 70 to the authentication code which was originally generated. If the two codes match, the I/O module 48 completes the authentication request by sending an authentication complete message back to the mobile device 70, as shown in step 210.

The above-described example contemplates the LEDs 49 on the I/O module as being the device to display the generated authentication code. Each LED 49 emits electromagnetic radiation in a visible spectrum. According to other aspects of the invention, the control device may emit electromagnetic radiation in other spectrums. For example, the control device may include an LED capable of emitting radiation in the infrared (IR) or ultraviolet (UV) spectrum. In some applications, the electromagnetic radiation may be in a radio frequency (RF) spectrum. In such applications, the mobile device 70 includes a sensor 77 capable of detecting the emitted radiation. According to still another aspect of the invention, the LED 49 on the control device may be a multi-color LED. The authentication code may include, not only a binary representation of a number, but may further include colors associated with each bit of the number. Each LED 49 may be set to the corresponding color in addition to being energized. The technician, T, identifies not only which LED is energized, but also the color to which the LED 49 is set.

By utilizing light in the visible spectrum, a technician, T, within a line-of-sight of the control device may authenticate the mobile device 70 to the control device. The authentication code is output in a spectrum of visible light. The technician, T, then observes the authentication code and enters the authentication code as the input code on the mobile device 70 via the user interface 76 present on the mobile device. Optionally, the sensor 77 may be a camera configured to detect light in the visible spectrum and to generate a feedback signal corresponding to the light incident on the camera, and the camera provides the feedback signal to the processor 72 on the mobile device 70. According to one aspect of the invention, an application executing on the processor 72 may include a trigger button or some other interface by which the technician, T, initiates a watch sequence by the camera. Once the watch sequence is initiated, the camera monitors the control device for light emitted in the visible spectrum. The control device may selectively enable light-emitting devices in a pattern detected by the camera. The pattern may change at a rate faster than is detectable by the technician and may further include a start and stop sequence by which the camera 77 determines the length of the authentication code being output by the control device. The processor 72 receives the pattern and converts the pattern to the input code received from the control device. It is further contemplated that other sensors 77, such as an IR sensor, a UV sensor, or an RF sensor may be similarly configured to receive electromagnetic radiation from the control device at the corresponding frequency and convert the electromagnetic radiation received at the sensor to an input code.

The above-described options for displaying the authentication code contemplate displaying the code on a single control device. According to another aspect of the invention, the authentication code may be displayed using multiple control devices. With reference again to Figs. 2 and 4, the industrial controller 40 includes a first I/O module 48A and a second I/O module 48B. A backplane 100 extends between the two I/O modules 48 allowing communication between the I/O modules and the processor module 44. In one embodiment, the processor module 44 assigns a first portion of the authentication code to the first I/O module 48A and a second portion of the authentication code to the second I/O module 48B. Each of the first and second I/O modules 48A, 48B display their respective portions of the authentication code. According to another embodiment, the processor 130 in the first I/O module 48A is in communication with the processor 140 in the second I/O module 48B. The processor 130 in the first I/O module 48A generates the authentication code and transmits a portion of the authentication code to the processor 140 in the second I/O module 48B. Each I/O module 48A, 48B displays the respective portions of the authentication code. Although discussed with respect to two I/O modules, it is contemplated that still additional numbers of I/O modules 48 may be utilized to display the authentication code. An application executing on the mobile device 70 may be in communication with the industrial controller 40 to receive the configuration of the industrial controller and display each I/O module on a display for the mobile device 70. The technician, T, enters each portion of the authentication code into the corresponding I/O module as displayed in the application on the mobile device 70.

The above-described process recites using the physical presence of the control device as one step for authentication of communication between a mobile device 70 and the control device. It is further contemplated that this process may also be one step of a multi-factor authentication process. In addition to displaying an authentication code, the mobile device 70 and the control device may be configured to transmit encrypted messages. According to one aspect of the invention, a public key may be stored on the mobile device to encrypt data sent to the control device, where a private key stored on the control device is used to decrypt the data. The authentication request, for example, may be encrypted by the mobile device 70 prior to transmission to the control device. The control device is able to decrypt the message and initiate the visual authentication process. According to another aspect of the invention, the authentication code may be utilized as an encryption key to transmit data between the mobile device 70 and the control device after the initial authentication steps are complete. A new authentication code may be generated by the control device for each communication session, thereby ensuring that the mobile device 70 and the control device are the only two devices aware of the authentication code being used for encryption.

It should be understood that the invention is not limited in its application to the details of construction and arrangements of the components set forth herein. The invention is capable of other embodiments and of being practiced or carried out in various ways. Variations and modifications of the foregoing are within the scope of the present invention. It also being understood that the invention disclosed and defined herein extends to all alternative combinations of two or more of the individual features mentioned or evident from the text and/or drawings. All of these different combinations constitute various alternative aspects of the present invention. The embodiments described herein explain the best modes known for practicing the invention and will enable others skilled in the art to utilize the invention.

In the preceding specification, various embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.
**The following is a list of further preferred embodiments of the invention:**
1. A method for authenticating communication in an industrial control system, the method comprising the steps of:
   generating an authentication request with a mobile computing device;
   transmitting the authentication request from the mobile computing device to a control device located within the industrial control system, wherein the mobile computing device is located within a line of sight of the control device;
   generating an authentication code within the control device responsive to receiving the authentication request;
   outputting the authentication code in an electromagnetic spectrum from the control device;
   receiving an input code corresponding to the authentication code at the mobile computing device;
   transmitting the input code from the mobile computing device to the control device; and
   completing authentication of communication between the mobile computing device and the control device when the input code received at the control device matches the authentication code generated by the control device.
2. The method of embodiment 1, wherein the step of outputting the authentication code in the electromagnetic spectrum from the control device further comprises the step of displaying the authentication code on a visual display screen in a visual spectrum.
3. The method of embodiment 1, wherein the step of outputting the authentication code in the electromagnetic spectrum from the control device further comprises the step of enabling a portion of a plurality of light emitting diodes in a predefined pattern to generate light in a visible spectrum.
4. The method of embodiment 3, wherein the plurality of light emitting diodes are located on the control device.
5. The method of embodiment 1, wherein:
   the step of outputting the authentication code in the electromagnetic spectrum from the control device further comprises the step of selectively enabling at least one device operative to emit electromagnetic radiation in a pattern; and
   the step of receiving the input code corresponding to the authentication code at the mobile computing device further comprises the step of receiving the electromagnetic radiation from the at least on device at a sensor on the mobile computing device.
6. The method of embodiment 1, wherein:
   the authentication code is output in a spectrum of visible light; and
   the step of receiving an input code corresponding to the authentication code further comprises the step of receiving input at a user interface, wherein a technician within the line of sight observed the authentication code and entered the input code on the user interface.
7. The method of embodiment 1, further comprising the steps of:
   encrypting a data packet at a first device selected from the mobile computing device and the control device;
   transmitting the encrypted data packet from the first device to a second device, wherein the second device is selected from the mobile computing device and the control device; and
   decrypting the encrypted data packet at the second device.
8. An apparatus for authenticating a control device in an industrial control system, the apparatus comprising:
   a mobile computing device including:
      a non-transitory memory storing a first plurality of instructions, and
      a first processor operative to execute the first plurality of instructions; and
   a control device including:
      an electromagnetic radiation generating device,
      a non-transitory memory storing a second plurality of instructions, and
      a second processor operative to execute the second plurality of instructions, wherein:
         the first processor is operative to generate an authentication request and to transmit the authentication request to the second processor,
         the second processor is operative to generate an authentication code responsive to receiving the authentication request and to enable the electromagnetic radiation generating device to output the authentication code,
         the first processor is further operative to:
            receive an input code corresponding to the authentication code, and
            transmit the input code to the second processor, and
         the second processor is further operative to verify the input code received from the first processor matches the authentication code.
9. The apparatus of embodiment 8, wherein:
   the electromagnetic radiation generating device is a visual display screen, and
   the second processor is operative to display the authentication code on the visual display screen.
10. The apparatus of embodiment 8, wherein:
   the electromagnetic radiation generating device includes a plurality of light emitting diodes, and
   the second processor is operative to enable a portion of the plurality of light emitting diodes to display the authentication code.
11. The apparatus of embodiment 10, further comprising a second control device including: a second plurality of light emitting diodes,
   a non-transitory memory storing a third plurality of instructions, and
   a third processor operative to execute the third plurality of instructions, wherein:
   the third processor is in communication with the second processor to receive at least a portion of the authentication code,
   the second processor is operative to enable a portion of the plurality of light emitting diodes to display a first portion of the authentication code, and
   the third processor is operative to enable a portion of the second plurality of light emitting diodes to display a second portion of the authentication code.
12. The system of embodiment 8, wherein:
   the mobile computing device includes a sensor operative to receive electromagnetic radiation and to generate a feedback signal to the first processor corresponding to the electromagnetic radiation incident on the sensor,
   the second processor is further operative to enable the electromagnetic radiation generating device in a pattern corresponding to the authentication code; and
   the input code received at the first processor is the pattern detected by the sensor.
13. The system of embodiment 8, wherein the electromagnetic radiation generating device emits light in a visible spectrum.
14. The system of embodiment 13, wherein:
   the mobile computing device includes a user interface, and
   the input code is received via the user interface from a technician within a line of sight of the electromagnetic radiation generating device that observed the authentication code.
15. The system of embodiment 13, wherein:
   the mobile computing device includes a camera operative to generate a feedback signal corresponding to the light incident on the camera, and
   the input code is generated from the feedback signal when the electromagnetic radiation generating device emits the light in the visible spectrum.
16. The system of embodiment 8, wherein:
   the electromagnetic radiation generating device emits light in an ultraviolet spectrum or in an infrared spectrum;
   the mobile computing device includes a camera operative to generate a feedback signal corresponding to the light in the ultraviolet or infrared spectrums that is incident on the camera; and
   the input code is generated from the feedback signal when the electromagnetic radiation generating device emits the light in the ultraviolet or infrared spectrum.
17. A method of using physical location for authentication, the method comprising the steps of:
   initiating communication between a mobile device and a control device located within an industrial control system;
   generating an authentication code within the control device;
   outputting the authentication code in either a visible spectrum, an infrared spectrum, or an ultraviolet spectrum from the control device;
   receiving an input code corresponding to the authentication code at the mobile device;
   transmitting the input code from the mobile device to the control device;
   verifying the input code received at the control device matches the authentication code; and
   permitting communication between the mobile device and the control device when the input code received at the control device matches the authentication code.
18. The method of embodiment 17, wherein:
   the authentication code is output in the visible spectrum; and
   the step of receiving the input code corresponding to the authentication code further comprises the step of receiving input at a user interface, wherein a technician within a line of sight observed the authentication code and entered the input code on the user interface.
19. The method of embodiment 17, wherein the step of receiving the input code further comprise the steps of:
   sensing the authentication code from either the visible spectrum, the infrared spectrum, or the ultraviolet spectrum with a sensor mounted on the mobile device;
   generating a feedback signal with the sensor; and
   converting the feedback signal to the input code with a processor in the mobile device.
20. The method of embodiment 17, further comprising the steps of:
   encrypting a data packet at a first device selected from the mobile device and the control device;
   transmitting the encrypted data packet from the first device to a second device, wherein the second device is selected from the mobile device and the control device; and
   decrypting the encrypted data packet at the second device.

## Claims

1. A method for authenticating communication in an industrial control system, the method comprising the steps of:
generating an authentication request with a mobile computing device;
transmitting the authentication request from the mobile computing device to a control device located within the industrial control system, wherein the mobile computing device is located within a line of sight of the control device;
generating an authentication code within the control device responsive to receiving the authentication request;
outputting the authentication code in an electromagnetic spectrum from the control device;
receiving an input code corresponding to the authentication code at the mobile computing device;
transmitting the input code from the mobile computing device to the control device; and
completing authentication of communication between the mobile computing device and the control device when the input code received at the control device matches the authentication code generated by the control device.

2. The method of claim 1, wherein the step of outputting the authentication code in the electromagnetic spectrum from the control device further comprises the step of displaying the authentication code on a visual display screen in a visual spectrum.

3. The method of claim 1 or 2, wherein the step of outputting the authentication code in the electromagnetic spectrum from the control device further comprises the step of enabling a portion of a plurality of light emitting diodes in a predefined pattern to generate light in a visible spectrum.

4. The method of claim 3, wherein the plurality of light emitting diodes are located on the control device.

5. The method of one of claims 1 to 4, wherein:
the step of outputting the authentication code in the electromagnetic spectrum from the control device further comprises the step of selectively enabling at least one device operative to emit electromagnetic radiation in a pattern; and
the step of receiving the input code corresponding to the authentication code at the mobile computing device further comprises the step of receiving the electromagnetic radiation from the at least on device at a sensor on the mobile computing device.

6. The method of one of claims 1 to 5, wherein:
the authentication code is output in a spectrum of visible light; and
the step of receiving an input code corresponding to the authentication code further comprises the step of receiving input at a user interface, wherein a technician within the line of sight observed the authentication code and entered the input code on the user interface.

7. The method of one of claims 1 to 6, further comprising the steps of:
encrypting a data packet at a first device selected from the mobile computing device and the control device;
transmitting the encrypted data packet from the first device to a second device, wherein the second device is selected from the mobile computing device and the control device; and
decrypting the encrypted data packet at the second device.

8. An apparatus for authenticating a control device in an industrial control system, the apparatus comprising:
a mobile computing device including:
a non-transitory memory storing a first plurality of instructions, and
a first processor operative to execute the first plurality of instructions; and
a control device including:
an electromagnetic radiation generating device,
a non-transitory memory storing a second plurality of instructions, and
a second processor operative to execute the second plurality of instructions, wherein:
the first processor is operative to generate an authentication request and to transmit the authentication request to the second processor,
the second processor is operative to generate an authentication code responsive to receiving the authentication request and to enable the electromagnetic radiation generating device to output the authentication code,
the first processor is further operative to:
receive an input code corresponding to the authentication code, and
transmit the input code to the second processor, and
the second processor is further operative to verify the input code received from the first processor matches the authentication code.

9. The apparatus of claim 8, wherein:
the electromagnetic radiation generating device is a visual display screen, and
the second processor is operative to display the authentication code on the visual display screen, or
wherein:
the electromagnetic radiation generating device includes a plurality of light emitting diodes, and
the second processor is operative to enable a portion of the plurality of light emitting diodes to display the authentication code.

10. The apparatus of claim 9, further comprising a second control device including: a second plurality of light emitting diodes,
a non-transitory memory storing a third plurality of instructions, and
a third processor operative to execute the third plurality of instructions, wherein:
the third processor is in communication with the second processor to receive at least a portion of the authentication code,
the second processor is operative to enable a portion of the plurality of light emitting diodes to display a first portion of the authentication code, and
the third processor is operative to enable a portion of the second plurality of light emitting diodes to display a second portion of the authentication code.

11. The system of one of claims 8 to 10, wherein:
the mobile computing device includes a sensor operative to receive electromagnetic radiation and to generate a feedback signal to the first processor corresponding to the electromagnetic radiation incident on the sensor,
the second processor is further operative to enable the electromagnetic radiation generating device in a pattern corresponding to the authentication code; and
the input code received at the first processor is the pattern detected by the sensor.

12. The system of one of claims 8 to 11, wherein the electromagnetic radiation generating device emits light in a visible spectrum, and/or
wherein:
the mobile computing device includes a user interface, and
the input code is received via the user interface from a technician within a line of sight of the electromagnetic radiation generating device that observed the authentication code, or
wherein:
the mobile computing device includes a camera operative to generate a feedback signal corresponding to the light incident on the camera, and
the input code is generated from the feedback signal when the electromagnetic radiation generating device emits the light in the visible spectrum.

13. The system of one of claims 8 to 12, wherein:
the electromagnetic radiation generating device emits light in an ultraviolet spectrum or in an infrared spectrum;
the mobile computing device includes a camera operative to generate a feedback signal corresponding to the light in the ultraviolet or infrared spectrums that is incident on the camera; and
the input code is generated from the feedback signal when the electromagnetic radiation generating device emits the light in the ultraviolet or infrared spectrum.

14. A method of using physical location for authentication, the method comprising the steps of:
initiating communication between a mobile device and a control device located within an industrial control system;
generating an authentication code within the control device;
outputting the authentication code in either a visible spectrum, an infrared spectrum, or an ultraviolet spectrum from the control device;
receiving an input code corresponding to the authentication code at the mobile device;
transmitting the input code from the mobile device to the control device;
verifying the input code received at the control device matches the authentication code; and
permitting communication between the mobile device and the control device when the input code received at the control device matches the authentication code.

15. The method of claim 14, wherein:
the authentication code is output in the visible spectrum; and
the step of receiving the input code corresponding to the authentication code further comprises the step of receiving input at a user interface, wherein a technician within a line of sight observed the authentication code and entered the input code on the user interface, or
wherein the step of receiving the input code further comprise the steps of:
sensing the authentication code from either the visible spectrum, the infrared spectrum, or the ultraviolet spectrum with a sensor mounted on the mobile device;
generating a feedback signal with the sensor; and
converting the feedback signal to the input code with a processor in the mobile device, or
further comprising the steps of:
encrypting a data packet at a first device selected from the mobile device and the control device;
transmitting the encrypted data packet from the first device to a second device, wherein the second device is selected from the mobile device and the control device; and
decrypting the encrypted data packet at the second device.
